# EUROPÄISCHE PATENTSCHRIFT

(11) **EP 1 091 996 B1**
(45) Veröffentlichungstag und Bekanntmachung des Hinweises auf die Patenterteilung: **22.12.2004**
(21) Anmeldenummer: 99922082.5
(22) Anmeldetag: 30.03.1999
(51) Int. Cl.: C08J 3/075, C08L 29/04, C08L 71/02

(54) **VERFAHREN ZUR HERSTELLUNG EINES BIOKATALYSATORS MIT EINEM GELS AUS POLYVINYLALKOHOL UND NACH DEM VERFAHREN HERGESTELLTER BIOKATALYSATOR**
PROCESS FOR PREPARING A BIOCATALYST WITH A POLYVINYL ALCOHOL GEL AND BIOCATALYST PRODUCED BY THIS PROCESS
PROCEDE DE PRODUCTION D'UN BIOCATALYSEUR AVEC UN GEL A BASE D'ALCOOL POLYVINYLIQUE ET BIOCATALYSEUR OBTENU A L'AIDE DUDIT PROCEDE

(30) Priorität: 20.06.1998 DE 19827552
(43) Veröffentlichungstag der Anmeldung: 18.04.2001
(73) Patentinhaber: Vorlop, Klaus-Dieter, 38102 Braunschweig (DE)
(72) Erfinder: VORLOP, Klaus-Dieter, D-38102 Braunschweig (DE); JEKEL, Maren, D-40476 Düsseldorf (DE)
(74) Vertreter: Lins, Edgar, Dipl.-Phys. Dr.jur.
(86) Internationale Anmeldenummer: PCT/DE1999/000975
(87) Internationale Veröffentlichungsnummer: WO 1999/067320

(56) Entgegenhaltungen:
- DE-A- 4 327 923
- DATABASE WPI Section Ch, Week 9541 Derwent Publications Ltd., London, GB; Class A14, AN 95-317555 XP002110290 & JP 07 216101 A (NAGURA M), 15. August 1995 (1995-08-15)
- CHEMICAL ABSTRACTS, vol. 115, no. 26, 30. Dezember 1991 (1991-12-30) Columbus, Ohio, US; abstract no. 287255, NAKURA, MASANORI ET AL: "Hydrogels containing polymer blends for prosthetic materials" XP002110289 & JP 03 161046 A (TERUMO CORP., JAPAN) 1989
- DATABASE WPI Section Ch, Week 9252 Derwent Publications Ltd., London, GB; Class A96, AN 92-426679 XP002110291 & JP 04 320685 A (KURARAY CO LTD), 11. November 1992 (1992-11-11)

## Beschreibung

Die Erfindung betrifft ein Verfahren zur Herstellung eines Biokatalysators mit einem in einem Gel aus Polyvinylalkohol eingebrachten, biologisch aktiven Material in Form von Mikroorganismen, Enzymen, Sporen und/oder Zellen. Die Erfindung betrifft ferner einen nach dem erfindungsgemäßen Verfahren hergestellten Biokatalysator sowie Herstellungsverfahren für Produkte, die mit einem derartigen Biokatalysator gebildet werden.

Es ist bekannt, daß Polyvinylalkohol (PVA) enthaltende Lösungen beim Stehenlassen eine Viskositätserhöhung zeigen. Es ist auch bekannt, daß sich PVA-Lösungen zu einem Gel umwandeln lassen, wenn die Lösung eingefroren und anschließend wieder aufgetaut wird (FR 2 107 711 A). Die so hergestellten Gele weisen allerdings eine relativ geringe Festigkeit auf.

Durch EP 0 107 055 B1 ist es ferner bekannt, die Festigkeit der durch Gefrieren hergestellten PVA-Gele dadurch zu erhöhen, daß der Einfrier- und Auftauvorgang wenigstens einmal, vorzugsweise zwei- bis fünfmal wiederholt wird. Dabei wird eine PVA-Lösung mit einem Verseifungsgrad von ≥ 95 mol%, vorzugsweise von ≥ 98 mol% verwendet. Die obere Grenztemperatur für das Gefrieren der Lösung beträgt -3°C, die Abkühlrate kann zwischen 0,1°C/min und 50°C/min liegen, die Auftaurate zwischen 1°C/min bis 50°C/min. Das eingesetzte PVA hat einen Polymerisierungsgrad vom mindestens 700. Die Konzentration des PVA in der Lösung sollte über 6 Gew% liegen und liegt vorzugsweise zwischen 6 und 25 Gew%. Das durch das mehrfach wiederholte Einfrieren und Auftauen hergestellt PVA-Gel hat eine gute mechanische Festigkeit und einen hohen Wassergehalt, der auch unter mechanischer Belastung beibehalten wird. Das hergestellte Gel ist hochelastisch, nicht toxisch und läßt sich für viele, insbesondere medizinische Anwendungen einsetzen.

Dem Gel können verschiedene Substanzen und Materialien beigemischt werden, die einerseits die Festigkeit erhöhen können, z.B. Glycol, Glycerin, Saccharose, Glucose, Agar, Gelatine, Methylcellulose usw. Durch Zugabe von Wirkstoffen, wie beispielsweise Heparin, können medizinische Anwendungen verwirklicht werden, bei denen der Wirkstoff kontinuierlich und gleichmäßig über lange Zeit aus dem Gel abgegeben wird. Das Gel kann ferner mit Mikroorganismen und Enzymen versetzt werden, um ein biologisch aktives System zu schaffen.

Durch die US-PS 4 663 358 ist es bekannt, der wäßrigen Polyvinylalkohollösung organische Lösungsmittel hinzuzufügen, um so den Gefrierpunkt der Lösung abzusenken. Dadurch wird erreicht, daß bei Gelierungstemperaturen, die unter -10 °C, vorzugsweise bei etwa -20 °C, liegen, ein Gefrieren des Wassers vermieden wird, wodurch ein homogeneres und damit transparenteres Gel erreicht wird. Die niedrige Gelierungstemperatur wird für die Bildung feinkristalliner Gele durchgeführt, die eine ausreichende mechanische Festigkeit haben.

Die Herstellung der PVA-Gele mit der Gefriertechnik ist aufwendig und zeitraubend.

Durch DE 43 27 923 C2 ist ein Verfahren bekannt, mit dem PVA-Gele ohne einen Gefriervorgang hergestellt werden können. Durch die Verwendung einer PVA-Lösung mit einem Hydrolysegrad von ≥ 99 mol-% und Zugabe eines gelösten Zusatzstoffes, der nichtwässrige OH- bzw. NH₂-Gruppen aufweist, läßt sich die Gelierung des PVA bei Temperaturen über 0 °C erreichen. Der Gelierungsvorgang benötigt dabei allerdings Zeiten von einigen Stunden, die ggf. durch eine weitere Lagerzeit von vielen Stunden zum Zwecke der Aushärtung zur vollen Stabilität der Gelkörper ergänzt wird. Dies ist für eine Herstellung größerer Gelkörpermengen im gewerblichen Maßstab naturgemäß nachteilig.

JP 04 320 685 A offenbart ein Verfahren zur Herstellung von Polyvinylalkohol, bei dem das Polyvinylalkohol durch Aussalzen ausgefällt wird. Demgemäß wird die wässrige Lösung des Polyvinylalkohols in eine wässrige, gesättigte Salzlösung eingetaucht, die das Polyvinylalkohol ausfällen lässt. Das ausgefällte Polyvinylalkohol wird anschließend getrocknet und kann vor dem Einsatz durch Aufquellen im Wasser wieder mit einem höheren Wassergehalt versehen werden. Die so hergestellten Polyvinylakoholteilchen sind weder ausreichend stabil noch weisen sie eine definierte Struktur mit definierten mechanischen Eigenschaften auf.

Die Flüssig-Flüssig-Phasentrennung und Gelierung in PVA-PEG-Wasser-Systemen, jedoch ohne Referenz zu Biologischen Materialien oder Biokatalysatoren, ist aus 1. Inamura, Polymer Journal, Band 18, Nr. 3, S. 269-272 (1986) bekannt.

Die der Erfindung zugrundeliegende Problemstellung besteht daher darin einen Biokatalysator mit einem in einem Gel aus Polyvinylalkohol eingebrachten, biologisch aktiven Material einfach und schnell herstellen zu können und dabei möglichst die Qualität der hergestellten Gelkörper noch zu verbessern.

Ausgehend von dieser Problemstellung wird erfindungsgemäß das Verfahren der eingangs erwähnten Art mit folgenden Verfahrensschritten ausgeführt:
a) Verwendung einer wässrigen Polyvinylalkohol-Lösung mit einem Hydrolysegrad von ≥ 98 mol%,
b) Zugabe eines Zusatzstoffes, der nach der Zugabe in der wässrigen Polyvinylalkohol-Lösung gelöst ist und bei Aufkonzentrierung eine getrennte, feinverteilte und wasserhaltige Phase bildet, ausgewählt aus der durch Polyethylenglycol, Zelluloseester, Zelluloseether, Stärkeester, Stärkeether, Polyalkylenglycolether, Polyalkylenglycole, langkettige Alkanole (CₙH₂ₙ₊₁OH mit N ≥ 8), Zuckerester und Zuckerether gebildeten Stoffgruppe,
c) Zugabe des biologisch aktiven Materials,
d) Trocknung der wässrigen Lösung bis zu einem Restwassergehalt von maximal 50 Gew.% zur Bildung der Phasentrennung und zur damit verbundenen Gelierung des Polyvinylalkohols,
e) Rückquellung des Polyvinylalkohols in einem wässrigen Medium.

Das erfindungsgemäße Verfahren erlaubt in überraschender Weise eine Gelierung des polyvinylalkohols innerhalb einiger Minuten bei Raumtemperatur oder gar höheren Temperaturen. Durch die Zugabe des wasserlöslichen Zusatzstoffes und der Aufkonzentrierung durch Verdunstung des Wassers wird eine feinverteilte Phasentrennung herbeigeführt, durch die die Gelierung innerhalb der PVA-Phase in kürzester Zeit gelingt. Hierfür ist Voraussetzung, daß auch der wasserlösliche Zusatzstoff eine wasserhaltige Phase ausbildet, so daß durch die Phasentrennung der PVA-Phase innerhalb kürzester Zeit ein entsprechender Wasseranteil entzogen wird, wodurch die Gelierung des Polyvinylalkohols bewirkt wird. Zweckmäßig ist es, wenn der wasserlösliche Zusatzstoff eine dem PVA wenigstens vergleichbare Affinität zu Wasser aufweist.

Die bei der Gelierung mit Wasser unterversorgte PVA-Phase nimmt beim anschließenden Rückquellen Wasser auf, wodurch die Elastizität und die mechanische Stabilität des PVA-Gels verbessert wird, ohne daß die Gelierung rückgängig gemacht wird. Es hat sich gezeigt, daß für die Rückquellung ein gewisser Elektrolytanteil im wässrigen Medium zur höheren Stabilität des PVA-Gels führt, so daß die Rückquellung vorzugsweise in Leitungswasser oder besser in einer Salzlösung erfolgt. Das erfindungsgemäße PVA-Gel eignet sich in hervorragender Weise zur Herstellung eines biologischen Katalysators.

Das erfindungsgemäße Verfahren bietet den Vorteil, daß es die Herstellung des PVA-Gels ohne großen Aufwand, insbesondere ohne einen Gefriervorgang und ohne wiederholte Trocknungsvorgänge innerhalb kurzer Zeit ermöglicht, so daß eine extrem wirtschaftliche Fertigung der PVA-Gelkörper möglich ist. Die erfindungsgemäßen Gelkörper zeichnen sich darüber hinaus durch eine hohe Elastizität und Stabilität, insbesondere Reißfestigkeit, aus und sind in dieser Hinsicht den nach den bisherigen Verfahren herstellbaren. PVA-Gelkörpern deutlich überlegen.

Zur weiteren Erhöhung der Stabilität und Elastizität der PVA-Gelkörper trägt bei, wenn zur Herstellung eine nachverseifte wässrige PVA-Lösung verwendet wird.

Ein bevorzugter wasserlöslicher Zusatzstoff ist Polyethylenglycol, der in einer Konzentration von 4 bis 30 Gew%, vorzugsweise 4 bis 20 Gew%, insbesondere 6 bis 16 Gew%, zugegeben wird. Andere Beispiele für mögliche Zusatzstoffe sind Celluloseester, Celluloseether, Stärkeester, Stärkeether, Polyalkylenglycolether, Polyalkylenglycole, langkettige Alkanole (CₙH₂ₙ₊₁OH mit n ≥ 8), Zuckerester, Zuckerether.

Die Trocknung der wässrigen Lösung zum Zwecke der Phasentrennung und der damit verbundenen Gelierung erfolgt bis zu einem Restwassergehalt von maximal 50 Gew%. Eine untere Grenze des Restwassergehalts von etwa 10 Gew% ergibt sich dadurch, daß das hergestellte PVA-Gel noch vollständig rückquellbar sein sollte, daß sich unterhalb des Restwassergehalts von etwa 10 Gew% eine verringerte Elastizität der Gelkörper ergibt und daß unterhalb des genannten Restwassergehalts etwaige eingeschlossene biologische Materialien geschädigt werden können. Ein bevorzugter Bereich für den Restwassergehalt liegt zwischen 10 und 30 Gew%.

Die Trocknung kann bequem innerhalb kurzer Zeit durch Verdunstung des Wassers an Luft bei Umgebungstemperatur durchgeführt werden, wenn die wässrige Lösung in kleine Portionen aufgeteilt wird, insbesondere solche Portionen, in denen die Lösung nur eine geringe Stärke aufweist. So ist es insbesondere mit Vorteil möglich, die Lösung auf eine harte Unterlage so aufzutropfen, daß der Durchmesser der Tropfen mindestens doppelt so groß ist wie die Höhe der Tropfen. Ähnliches läßt sich durch Eingießen der Lösung in eine Gießform und/oder als Beschichtung eines Trägermaterials erreichen. Durch eine dünne oder gar filmartige Ausbildung wird die Verdunstung auf den erforderlichen Restwassergehalt innerhalb einiger Minuten, beispielsweise innerhalb von 15 Minuten, erreicht. Eine Beschleunigung des Trocknungsvorganges - und damit des Geliervorganges - läßt sich erreichen durch die Durchführung der Trocknung in einem Trockenofen bei erhöhter Temperatur.

Die für das Rückquellen mit Vorteil verwendete Salzlösung enthält vorzugsweise mehrwertige Anionen.

Für die Immobilisierung von biologisch aktivem Material ist an dem erfindungsgemäßen Verfahren vorteilhaft, dass sich für das biologische Material außerordentlich schonend ausführen lässt, sodass das biologische Material gegenüber anderen Immobilisierungsverfahren eine deutlich höhere Anfangsaktivität aufweist.

Dies kann noch dadurch unterstützt werden, daß das wässrige Medium, in dem das Rückquellen des PVA-Gels erfolgt, zugleich eine Nährlösung für das biologisch aktive Material ist.

Die Dichte des erfindungsgemäß hergestellten PVA-Gels kann durch geeignete Zusätze modifiziert werden. So kann das spezifische Gewicht beispielsweise durch Zugabe von Titanoxid erhöht und durch Zugabe von kleinsten Glashohlkügelchen erniedrigt werden.

Die erfindungsgemäße Gelierung ist - wie erwähnt - bei Raumtemperatur möglich, kann jedoch bei tieferen oder höheren Temperaturen durchgeführt werden. Das in dem PVA-Gel eingeschlossene biologisch aktive Material können Enzyme, Mikroorganismen, Sporen und Zellen sein.

Das erfindungsgemäße Verfahren läßt sich in vielen Ausführungsformen realisieren. So ist es beispielsweise möglich, in einem Fallturm das Trocknen eines Tropfens zur Phasenbildung während des Fallvorganges ablaufen zu lassen, so daß beim Auftreffen des Tropfens auf einer Unterlage die Gelierung nach der Phasentrennung bereits stattgefunden hat. Dieses Herstellungsverfahren eignet sich insbesondere für die Herstellung von PVA-Gelkörpern als Chromatographiematerial, das einen Durchmesser für Laborzwecke von 10 bis 100 µm und im übrigen von 100 bis 800 µm haben kann. Ferner ist es möglich, eine höherviskos eingestellte Ausgangsflüssigkeit beim Extrudieren eines Stranges zu trocknen und dabei die Gelierung des PVA durchzuführen.

Der nach dem erfindungsgemäßen Verfahren hergestellte Gelkörper weist eine gegenüber vorbekannten Gelkörpern überlegene mechanische Stabilität, insbesondere hinsichtlich der Abriebfestigkeit und der Reißfestigkeit auf.

Diese überlegenen mechanischen Eigenschaften erlauben es insbesondere, den erfindungsgemäßen Gelkörper in einer reaktionskinetisch günstigen Linsenform herzustellen, in der vorbekannte Gelkörper keine ausreichende mechanische Stabilität, insbesondere Rührstabilität, aufgewiesen haben. Der erfindungsgemäße Gelkörper ist hingegen über viele Monate auch bei hochtourigen Rührvorgängen stabil und abriebfest. Die Linsenform mit einem großen Durchmesser und einer geringen Höhe bewirkt, dass das biologisch aktive Material immer nahe der Oberfläche angeordnet ist, woraus die reaktionskinetisch günstige Konstellation resultiert.

Die vorliegende Erfindung ermöglicht in einfacher Weise, einen magnetischen Zusatzstoff dem Polyvinylalkoholkörper hinzuzufügen; um die Gelkörper ggf. durch Magnete aus einer Flüssigkeit ohne Schwierigkeiten absammeln zu können.

Es hat sich gezeigt, daß die-Porenstruktur der erfindungsgemäßen polyvinylalkohol-Gelkörper durch das Molekulargewicht des zugegebenen, die Phasentrennung bewirkenden Zusatzstoffes steuerbar ist. Durch Steuerung des Molekulargewichts des zugegebenen Polyethylenglycols, dessen Molekulargewicht bevorzugt zwischen 800 und 1350 liegt, können Porengrößen des Polyvinylalkohol-Gelkörpers zwischen 1 und 15 µm eingestellt werden.

Für die Herstellung der erfindungsgemäßen wässrigen Lösung aus Polyvinylalkohol und dem Zusatzstoff hat es sich gezeigt, daß bei verwendung von destilliertem Wasser ein erhöhter Trocknungsgrad erforderlich ist, um gleiche mechanische Ergebnisse zu erzielen. Die Ergebnisse werden sofort besser, wenn übliches Leitungswasser mit einer gewissen Härte verwendet wird. Demzufolge ist davon auszugehen, daß ein gewisser Salzgehalt des Wassers für das erfindungsgemäße Verfahren vorteilhaft ist.

Die Erfindung soll im folgenden anhand von Ausführungsbeispielen näher erläutert werden.

### Beispiel 1:

Zu 2 g PVA und 1,2 g Polyethylenglycol (PEG 1000) werden 16,8 g Wasser gegeben. Die Lösung wird so lange auf 90 °C erhitzt, bis alle Komponenten vollständig gelöst sind, so daß eine viskose, farblose Lösung erhalten wird. Nach Abkühlen auf 30 °C wird die Polymerlösung mit einer Spritze unter Anlagen eines Druckes auf einer Polypropylenplatte vertropft. Das Vertropfen erfolgt dabei durch Auftippen der Kanüle auf die PP-Platte mit einer Geschwindigkeit von ca. 1-2/s; die Tropfengröße beträgt im Durchmesser ca. 3 mm und in der Höhe ca. 1 mm. Nach dem Auftropfen bildet sich ein weißer wachsartiger Film auf der Tropfenoberfläche aus. Nachdem bei Raumtemperatur 89 Gew% des Wassers verdunstet sind, werden Gelkörper in Wasser oder einem salinen Medium zurückgequollen. Die erhaltenen Gelkörper haben einen Durchmesser von 3-4 mm und eine Höhe von ca. 200-400 µm.

### Beispiel 2:

Nach dem Abkühlen der Polymersuspension (Zusammensetzung: 2 g PVA, 1,2 g PEG 1000 und 15,8 g Wasser) wird 1 ml einer nitrifizierenden Mischkultur (Nitrosomonas europaea und Nitrobacter winogradsky) zu 20 g Polymerlösung gegeben und dispergiert, so daß eine Biotrockenmassebeladung (BTM) von 0,06 Gew% resultiert. Die Herstellung der Gelkörper erfolgt nach Beispiel 1. Die erhaltenen Gelkörper werden in einem Standardmineralsalzmedium (STMN) für Nitrifizierer zurückgequollen. Die so hergestellten Immobilisate weisen direkt nach der Immobilisierung eine Anfangsaktivität von ca. 70 % für Nitrosomonas spp. und 100 % für Nitrobacter spp. verglichen mit der gleichen Menge freier Nitrifizierer auf.

Beim Einschluß der Nitrifizierer in PVA-Kryogele bei -20 °C beträgt die Anfangsaktivität für Nitrosomonas spp. ca. 1 %, bei -10 °C ca. 25 % bei abnehmender mechanischer Stabilität der PVA-Hydrogele.

Die Inkubation der Immobilisate -erfolgt im gleichen Medium bei 30 °C. Werden 10 mg Gelkörper in 30 ml STMN inkubiert, so wird nach 19 Tagen eine maximale Ammoniumabbaurate zwischen 7 - 8 µmol NH₄⁺/ ( gₖₐₜ *min) erzielt.

### Beispiel 3:

In 12,8 g H₂O werden 1,6 g Polyethylenglycol (PEG 1000) gelöst und anschließend 1,6 g PVA zugegeben und weiter wie in Beispiel 1 verfahren. Nach dem Abkühlen der Polymerlösung auf 30 °C werden 4 ml einer über Nacht in sauerstofffreier Atmosphäre gewachsenen Kultur des strikt anaeroben Bakteriums Clostridium butyricum NRRL B-1024, das Glycerin in 1,3-Propandiol (PD) konvertiert, in der Lösung dispergiert (Zellbeladung der Polymerlösung: 6x10⁷ je ml). Die Herstellung der Gelkörper erfolgt gemäß Beispiel 1. Nachdem bei Raumtemperatur 70 Gew% des Wassers verdunstet sind, werden die Immobilisate in Mineralsalzmedium (20facher Überschuß) zurückgequollen. Die Inkubation der zellbeladenen Gelkörper erfolgt in dem gleichen Medium (40facher Überschuß) bei 30 °C. Für eine ausreichende Nährstoffversorgung der immobilisierten Biomasse wird das Medium in der Anwachsphase mehrfach gewechselt.

Werden 0,25 g des so erhaltenen immobilisierten Biokatalysators in 40 ml Mineralsalzmedium mit 24,4 g·L-1 Glycerin eingesetzt, nimmt die 1,3-PD-Konzentration innerhalb von 3,25 h um 2,8 g·L-1 zu. Dies entspricht einer Katalysatoraktivität von 0,14 g 1,3-PD je g Kat und Stunde. Nach Abzug der Aktivität der ausgewachsenen Zellen ergibt sich eine Katalysatoraktivität von 0,08 g 1,3-PD (gₖₐₜ *h).

### Beispiel 4:

Zu 2 g PVAL und 1,2 g Polyethylenglycol (PEG 1000) werden 15,8 g Wasser gegeben und weiter wie in Beispiel 1 verfahren.

Nach dem Abkühlen der Polymersuspension auf ca. 30 - 37 °C wird 1 ml einer definierten Sporensuspension des Pilzes Aspergillus terreus zu 20 g Polymerlösung gegeben und dispergiert. Die Sporensuspension wird so gewählt, daß sich nach 5 d Bewuchs im Wachstumsmedium eine Biotrockenmasse-Beladung von 0,005 Gew% ergibt.

Nachdem bei Raumtemperatur 70 Gew% des Wassers verdunstet sind, werden die Immobilisate in Mineralsalzmedium für Aspergillus terreus (20facher Überschuß) zurückgequollen.

Die Inkubation der Immobilisate erfolgt im Wachstumsmedium. Zur Produktion der Itaconsäure wird das Wachstumsmedium durch Produktionsmedium ersetzt.

Die hergestellten Immobilisate weisen direkt nach der Immobilisierung eine Anfangsaktivität von ca. 60 % verglichen mit der gleichen Menge freier Pilzzellen auf. Werden 0,2 g Gelkörper in 100 ml Produktionsmedium mit 60 g/l Glucose inkubiert, so werden nach 7 d Produktitäten von 35 mg Itaconsäure/(gₖₐₜ *h) erreicht.

### Beispiel 5:

Größere Mengen an Gelkörpern werden durch Vertropfen der Polymerlösung (Zusammensetzung gemäß Beispiel 1) durch ein Multidüsensystem auf ein Förderband erhalten. Nach dem Prinzip eines Bandtrockners werden die PVA-Tropfen in einem Trockentunnel bis zu einem definierten Restfeuchtegehalt getrocknet und anschließend durch einen Abstreifer in einem Auffangbehälter gesammelt und dort rückgequollen und gewaschen.

### Beispiel 6:

Bei der Herstellung gemäß Beispiel 1 wird die Polymerlösung nicht vertropft sondern in vorgefertigte halboffene Formen mit einem Innendurchmesser von 1-10 mm und beliebiger Länge gegossen.

Nach dem Rückquellen in Wasser lassen sich die Stränge bis auf die 3-4fache Länge dehnen, ohne zu zerreißen. Die Längenausdehnung ist irreversibel. Ein derart gefertigter Strang kann mit einem 500 g Gewicht belastet werden, ohne zu zerreißen.

### Beispiel 7:

Die gemäß Beispiel 6 hergestellten Stränge werden nach einem Lagerzeitraum von 14 Tagen in Leitungswasser mechanisch charakterisiert. Zu diesem Zeitpunkt weise die Stränge eine Breite von ca. 8 mm und eine Höhe von ca. 1 mm auf. Der Rückquellgrad berücksichtigt die Gewichtsabnahme des Stranges nach dem Rückquellen und 14 d Lagerung in Wasser bezogen auf die Gesamtmasse der verwendeten Polymerlösung vor dem Trocknungsprozeß. Die Stränge zeigen bis zu einer Reißdehnung von 40 % elastisches Verhalten.
- Mechanische Charakterisierung der hergestellten Stränge bei verschiedenen Trocknungsgraden für die Zusammensetzung 10 Gew% PVA und 6 Gew% PEG 1000:

| Restwassergehalt nach der Trocknung [%] | Rückquellgrad [%] | Reißdehnung [%] | E-Modul [N/mm²] |
|---|---|---|---|
| 27 | 76 | 455 | 0,11 |
| 20 | 74 | 420 | 0,11 |
| 15 | 68 | 410 | 0,18 |
| 13 | 65 | 390 | 0,24 |
| 10 | 63 | 380 | 0,27 |
| 1 | 57 | 360 | 0,34 |

- Mechanische Charakterisierung der Stränge bei einem Trocknungsgrad von 80 Gew% für die Zusammensetzung 10 Gew% PVA und 8 Gew% PEG für verschiedene PEG-Sorten:

| PEG-Sorte | Rückquellgrad [%] | Reißdehnung [%] | E-Modul [N/mm²] |
|---|---|---|---|
| 400 | 57 | 410 | 0,27 |
| 600 | 66 | 290 | 0,22 |
| 800 | 82 | 360 | 0,19 |
| 1000 | 84 | 420 | 0,11 |
| 1350 | 92 | 370 | 0,12 |

- Mechanische Eigenschaften der PVA-Hydrogel-Stränge für verschiedene PVA-Konzentrationen unter Zusatz von 6 Gew% PEG 1000 bei einem Trocknungsgrad (Menge des während des Trocknungsprozesses verdunsteten Wasser) von 80 Gew%:

| PVAL [%] | Reißdehnung [%] | E-Modul [N/mm²] |
|---|---|---|
| 8 | 350 | 0,09 |
| 10 | 420 | 0,11 |
| 12 | 420 | 0,17 |
| 14 | 460 | 0,19 |
| 16 | 440 | 0,25 |

- Mechanische Eigenschaften der Stränge bei einem Trocknungsgrad von 80 Gew% für die Zusammensetzung 10 Gew% PVA und 6 Gew% PEG 1000 für verschiedene Rückquellmedien

| Rückquellmedium | Reißdehnung [%] | E-Modul [N/mm²] |
|---|---|---|
| Leitungswasser | 420 | 0,11 |
| K₂HPO₄ (100 mmol/l) | 410 | 0,17 |
| K₂SO₄ (120 mmol/l) | 530 | 0,15 |
| CaCl₂ (120 mmol/l) | 360 | 0,10 |
| KCl (175 mmol/l) | 370 | 0,15 |

### Beispiel 8:

Gelkörper werden gemäß Beispiel 1 hergestellt und in deionisiertem Wasser (5 µS H₂O) zurückgequollen. Der Rückquellgrad der Gelkörper wird direkt nach dem Rückquellvorgang für verschiedene Trocknungsgrade bestimmt. Bei einem Rückquellgrad von 100 Gew% ist das Gewicht der Gelkörper vor dem Trocknungsprozeß und nach dem Rückquellen gleich, wie sich der beigefügten Zeichnungsfigur entnehmen läßt.

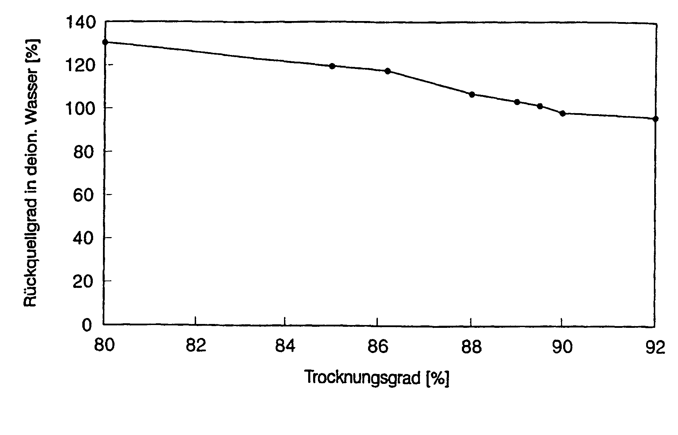

## Patentansprüche

1. Verfahren zur Herstellung eines Biokatalysators mit einem in einem Gel aus Polyvinylalkohol eingebrachten, biologisch aktiven Material in Form von Mikroorganismen, Enzymen, Sporen und/oder Zellen, mit den Verfahrensschritten
a) Verwendung einer wässrigen Polyvinylalkohol-Lösung mit einem Hydrolysegrad von ≥ 98 mol%,
b) Zugabe eines Zusatzstoffes, der nach der Zugabe in der wässrigen Polyvinylalkohol-Lösung gelöst ist und bei Aufkonzentrierung eine getrennte, fein verteilte und wasserhaltige Phase bildet, ausgewählt aus der durch Polyethylenglycol, Zelluloseester, Zelluloseether, Stärkeester, Stärkeether, Polyalkylenglycolether, Polyalkylenglycole, langkettige Alkanole (CₙH₂ₙ₊₁OH mit N ≥ 8), Zuckerester und Zuckerether gebildeten Stoffgruppe,
c) Zugabe des biologisch aktiven Materials,
d) Trocknung der wässrigen Lösung bis zu einem Restwassergehalt von maximal 50 Gew.% zur Bildung der Phasentrennung und zur damit verbundenen Gelierung des Polyvinylalkohols,
e) Rückquellung des Polyvinylalkohols in einem wässrigen Medium.

2. Verfahren nach Anspruch 1, bei dem die Polyvinylalkohol-Lösung eine Konzentration von 4 - 30 Gew%, vorzugsweise 6 - 16 Gew% aufweist.

3. Verfahren nach Anspruch 1 oder 2, bei dem ein wasserlöslicher Zusatzstoff verwendet wird, dessen Affinität zu Wasser wenigstens vergleichbar mit der des Polyvinylalkohols ist.

4. Verfahren nach einem der Ansprüche 1 bis 3, bei dem der wasserlösliche Zusatzstoff aus der Gruppe Cellloseester, Celluloseether, Stärkeester, Stärkeether, Polyalkylenglycolether, Polyalkylenglycole, langkettige Alkanole (n ≥ 8), Zuckerester, Zuckerether ausgewählt wird.

5. Verfahren nach Anspruch 4, bei dem als wasserlöslicher Zusatzstoff Polyethylenglycol verwendet wird.

6. Verfahren nach einem der Ansprüche 1 bis 5, bei dem der wasserlösliche Zusatzstoff in einer Konzentration von 4 - 20 Gew%, vorzugsweise 6 - 10 Gew%, verwendet wird.

7. Verfahren nach einem der Ansprüche 1 bis 6, bei dem die Trocknung der wässrigen Lösung bis zu einem Restwassergehalt von mindestens 10 Gew% durchgeführt wird.

8. Verfahren nach Anspruch 7, bei dem die Trocknung der wässrigen Lösung bis zu einem Restwassergehalt von 10 - 30 Gew% durchgeführt wird.

9. Verfahren nach einem der Ansprüche 1 bis 8, bei dem die Trocknung nach einem Auftropfen der Lösung auf eine harte Unterlage durchgeführt wird.

10. Verfahren nach einem der Ansprüche 1 bis 9, bei dem die Trocknung nach einem Eingießen der Lösung in eine Gießform durchgeführt wird.

11. Verfahren nach Anspruch 9 oder 10, bei dem das Auftropfen oder Eingießen so durchgeführt wird, dass der Gelkörper mit einem Durchmesser ausgebildet wird, der wenigstens doppelt so groß wie seine Höhe ist.

12. Verfahren nach Anspruch 11, bei dem das Auftropfen oder Eingießen so durchgeführt wird, dass der Gelkörper mit einem Durchmesser > 1 mm, vorzugsweise zwischen 2 und 4 mm, und einer Höhe zwischen 0,1 und 1 mm, vorzugsweise zwischen 0,2 und 0,4 mm, ausgebildet wird.

13. Verfahren nach einem der Ansprüche 1 bis 8, bei dem die Trocknung nach einem Ausgießen der Lösung zu einem länglichen Strang durchgeführt wird.

14. Verfahren nach einem der Ansprüche 1 bis 13, bei dem die Trocknung der wässrigen Lösung nach Aufgießen auf einem Trägermaterial durchgeführt wird.

15. Verfahren nach einem der Ansprüche 1 bis 14, bei dem das Rückquellen in Leitungswasser durchgeführt wird.

16. Verfahren nach einem der Ansprüche 1 bis 14, bei dem das Rückquellen in einer Salzlösung durchgeführt wird.

17. Verfahren nach Anspruch 16, bei dem als Salzlösung eine Nährlösung für das biologisch aktive Material verwendet wird.

18. Verfahren nach Anspruch 16 oder 17 unter Verwendung einer mehrwertige Anionen enthaltenden Salzlösung.

19. Verfahren nach einem der Ansprüche 1 bis 18, bei dem die Trocknung vollständig beim Fallen eines erzeugten Tropfens in einem Fallturm durchgeführt wird.

20. Mechanisch hochstabiler Biokatalysator aus Polyvinylalkohol, hergestellt nach dem Verfahren nach einem der Ansprüche 1 bis 19.

21. Biokatalysator nach Anspruch 20, hergestellt in einer Linsenform, in der der Durchmesser wesentlich größer als die Höhe ist.

22. Biokatalysator nach Anspruch 20 oder 21 mit einem magnetischen Zusatzstoff.

## Claims

1. Process for producing a biocatalyst with a biologically active material, introduced into a gel of polyvinyl alcohol, in the form of microorganisms, enzymes, spores and/or cells with the process steps
a) Use of an aqueous polyvinyl alcohol solution with a degree of hydrolysis of ≥ 98 mol %.
b) Addition of an additive that is dissolved in the aqueous polyvinyl alcohol solution and forms a separate, finely distributed and aqueous phase after concentration of the solution selected from the group formed by polyethylene glycol, cellulose esters, cellulose ethers, starch esters, starch ethers, polyalkylene glycol ethers, polyalkylene glycols, long-chain alkanoles (CₙH₂ₙ₊₁OH mit N ≥ 8), sugar esters and sugar ethers.
c) Addition of the biologically active material.
d) Dehydration of the aqueous solution to a maximum residual water content of 50 wt.% in order to cause the phases to separate and hence the polyvinyl alcohol to gel.
e) Rehydration of the polyvinyl alcohol in an aqueous medium.

2. Process according to Claim 1, in which the polyvinyl alcohol solution has a concentration of 4 to 30 wt.%, preferably 6 to 16 wt.%.

3. Process according to Claims 1 and 2, in which a water-soluble additive is used which has an affinity to water at least similar to that of the polyvinyl alcohol.

4. Process according to Claims 1 to 3, in which the water-soluble additive is selected from the group of cellulose esters, cellulose ethers, starch esters, starch ethers, polyalkylene glycol ethers, polyalkylene glycols, long-chain alkanoles (n ≥ 8), sugar esters and sugar ethers.

5. Process according to Claim 4, in which polyethylene glycol is used as a water-soluble additive.

6. Process according to Claims 1 to 5, in which the water-soluble additive is used in a concentration of 4 to 20 wt.%, preferably 6 to 10 wt.%.

7. Process according to Claims 1 to 6, in which the dehydration of the aqueous solution is carried out until a residual water content of at least 10 wt.% is reached.

8. Process according to Claim 7, in which the dehydration of the aqueous solution is carried out until a residual water content of 10 to 30 wt.% is reached.

9. Process according to Claims 1 to 8, in which the dehydration process is carried out after dripping the solution onto a hard surface.

10. Process according to Claims 1 to 9, in which the dehydration process is carried out after pouring the solution into a form.

11. Process according to Claims 9 and 10, in which the dripping or pouring is carried out in such a way that the gel substance is formed with a diameter at least double its height.

12. Process according to Claim 11, in which the dripping or pouring is carried out in such a way that the gel substance is formed with a diameter of > 1 mm, preferably between 2 and 4 mm, and a height between 0.1 and 1 mm, preferably between 0.2 and 0.4 mm.

13. Process according to Claims 1 to 8, in which the dehydration process is carried out after pouring the solution to form a long strand.

14. Process according to Claims 1 to 13, in which the dehydration process is carried out after pouring the solution onto a base material.

15. Process according to Claims 1 to 14, in which the rehydration is carried out in tap water.

16. Process according to Claims 1 to 14, in which the rehydration is carried out in a saline solution.

17. Process according to Claim 16, in which a culture solution for the biologically active material is used as the saline solution.

18. Process according to Claims 16 and 17 using a saline solution containing polyvalent anions.

19. Process according to Claims 1 to 18, in which the dehydration process is completely carried out during the time the created drop falls in a drop tower.

20. Mechanically high stable biocatalyst of polyvinyl alcohol, produced according to the process according to Claims 1 to 19.

21. Biocatalyst according to Claim 20, produced in a lenticular form in which the diameter is significantly greater than the height.

22. Biocatalyst according to Claims 20 and 21 with a magnetic additive.

## Revendications

1. Procédé de préparation d'un biocatalyseur comprenant une matière active biologique sous forme de micro-organismes, enzymes, spores et/ou cellules, introduite dans un gel à base d'alcool polyvinylique, comprenant les étapes de procédé :
a) utilisation d'une solution aqueuse d'alcool polyvinylique présentant un degré d'hydrolyse ≥ à 98 % en mole,
b) ajout d'un produit d'addition qui, après l'addition, est dissout dans la solution aqueuse d'alcool polyvinylique et qui, par concentration, forme une phase séparée finement répartie et aqueuse, choisi parmi le groupe de produits comprenant le polyéthylène glycol, l'ester de cellulose, l'éther de cellulose, l'ester d'amidon, l'éther d'amidon, les éthers de polyalkylènes glycols, les polyalkylènes glycols, les alcanols à longue chaîne (CₙH₂ₙ₊₁OH avec N≥ 8), l'ester de sucre et l'éther de sucre,
c) addition de la matière active biologique,
d) séchage de la solution aqueuse jusqu'à l'obtention d'une teneur en eau résiduelle maximale égale à 50 % en poids pour réaliser la séparation de phases et pour réaliser, en liaison avec celle-ci, la gélification de l'alcool polyvinylique,
e) regonflement de l'alcool polyvinylique dans un milieu aqueux.

2. Procédé selon la revendication 1, dans lequel la solution d'alcool polyvinylique présente une concentration de 4 - 30% en poids, de préférence 6 - 16% en poids.

3. Procédé selon la revendication 1 ou 2, dans lequel on utilise un produit d'addition soluble dans l'eau dont l'affinité pour l'eau est au moins comparable à celle de l'alcool polyvinylique.

4. Procédé selon l'une des revendications 1 à 3, dans lequel le produit d'addition soluble dans l'eau est choisi parmi le groupe comprenant l'ester de cellulose, l'éther de cellulose, l'ester d'amidon, l'éther d'amidon, les polyalkylènes glycol éthers, le polyalkylène glycol, les alcanols à longue chaîne (n ≥ à 8), l'ester de sucre, l'éther de sucre.

5. Procédé selon la revendication 4, dans lequel on utilise en tant que produit d'addition soluble dans l'eau du polyéthylène glycol.

6. Procédé selon l'une des revendications 1 à 5, dans lequel le produit d'addition soluble dans l'eau est utilisé dans une concentration de 4-20 % en poids, de préférence de 6-10 % en poids.

7. Procédé selon l'une des revendications 1 à 6, dans lequel le séchage de la solution aqueuse est conduit jusqu'à obtenir une teneur en eau résiduelle d'au moins 10 % en poids.

8. Procédé selon la revendication 7, dans lequel le séchage de la solution aqueuse est conduit jusqu'à une teneur en eau résiduelle de 10-30 % en poids.

9. Procédé selon l'une des revendications 1 à 8, dans lequel le séchage est conduit après un égouttage de la solution sur un support dur.

10. Solution selon l'une des revendications 1 à 9, dans laquelle le séchage est conduit après une coulée de la solution dans une forme de moulage.

11. Procédé selon la revendication 9 ou 10, dans lequel l'égouttage ou la coulée est conduit de telle sorte que le corps de gel est réalisé avec un diamètre qui est au moins égal au double de sa hauteur.

12. Procédé selon la revendication 11, dans lequel l'égouttage ou la coulée est conduit de telle sorte que le corps de gel présente un diamètre supérieur à 1 mm, de préférence compris entre 2 et 4 mm, et une hauteur comprise entre 0,1 et 1 mm, de préférence entre 0,2 et 0,4 mm.

13. Procédé selon l'une des revendications 1 à 8, dans lequel le séchage est conduit après une coulée de la solution selon une corde allongée.

14. Procédé selon l'une des revendications 1 à 13, dans lequel le séchage de la solution aqueuse est conduit après coulée sur un matériau de support.

15. Procédé selon l'une des revendications 1 à 14, dans lequel le regonflement est réalisé dans de l'eau du robinet.

16. Procédé selon l'une des revendications 1 à 14, dans lequel le regonflement est conduit dans une solution saline.

17. Procédé selon la revendication 16, dans lequel on utilise en tant que solution saline une solution de nutrition pour la matière biologiquement active.

18. Procédé selon t'une des revendications 16 ou 17, comprenant l'utilisation d'une solution saline renfermant des anions polyvalents.

19. Procédé selon l'une des revendications 1 à 18, dans lequel le séchage est conduit entièrement par la chute d'une goutte réalisée dans une tour de chute.

20. Biocatalyseur hautement stable mécaniquement à base d'alcool polyvinylique, préparé suivant le procédé selon l'une des revendications 1 à 19.

21. Biocatalyseur selon la revendication 20, préparé sous forme de lentille dans laquelle le diamètre est sensiblement plus important que la hauteur.

22. Biocatalyseur selon la revendication 20 ou 21, comportant un produit d'addition magnétique.
